# EUROPÄISCHE PATENTSCHRIFT

(11) **EP 1 929 371 B1**
(45) Veröffentlichungstag und Bekanntmachung des Hinweises auf die Patenterteilung: **11.04.2012**
(21) Anmeldenummer: 06777022.2
(22) Anmeldetag: 23.08.2006
(51) Int. Cl.: G03B 42/08, G02B 26/10, A61B 6/14

(54) **Gerät zum Auslesen belichteter Speicherfolien**
Device for reading exposed phosphor sheets
Appareil pour lire des feuilles photostimulables exposées

(30) Priorität: 27.09.2005 DE 102005046249
(43) Veröffentlichungstag der Anmeldung: 11.06.2008
(73) Patentinhaber: Dürr Dental AG, 74321 Bietigheim-Bissingen (DE)
(72) Erfinder: THOMS, Michael, 74321 Bietigheim-Bissingen (DE); NOWACEK, Wilhelm, 74389 Cleebronn (DE); ALZNER, Edgar, Garden City, NY 11530 (US); GROSS, Walter, Masspequa, NY 11758 (US)
(74) Vertreter: Ostertag, Reinhard
(86) Internationale Anmeldenummer: PCT/EP2006/008262
(87) Internationale Veröffentlichungsnummer: WO 2007/036270

(56) Entgegenhaltungen:
- EP-A- 1 707 991
- JP-A- 8 062 746
- US-A- 4 727 252
- US-A- 5 081 357
- US-A- 5 095 209
- US-A- 5 237 177
- US-A- 5 818 065
- US-A1- 2004 169 152
- US-A1- 2004 238 768
- US-A1- 2005 205 813
- US-B2- 6 599 014

## Beschreibung

Die Erfindung betrifft ein Gerät zum auslesen belichteter Speicherfolien gemäß dem Oberbegriff des Anspruchs 1.

Belichtete Speicherfolien enthalten in Form lokal angeregter metastabiler Anregungszustände von Farbzentren ein latentes Röntgenbild, welches man dadurch erhält, dass man die Speicherfolie hinter einem Objekt in von einer Röntgenquelle erzeugtes Röntgenlicht stellt.

Dieses latente Bild wird dadurch ausgelesen, dass man die Speicherfolie Punkt für Punkt mit einem Auslesestrahl kleinen Durchmessers abtastet. Die Wellenlänge des Ausleselichtes ist so gewählt, dass es ein metastabiles angeregtes Zentrum in einen höheren elektronischen Zustand anregt, der rasch unter Fluoreszenz zerfällt.

Das so ausgesandte Fluoreszenzlicht wird mit einer Detektionseinrichtung, welche zum Beispiel ein Photomultiplier als lichtempfindliches Element enthalten kann, gemessen. Aus dem elektrischen Ausgangssignal des Detektionsmittels und elektrischen Signalen, welche die momentane Stellung des Auslesestrahles wiedergeben, kann man dann ein durch elektrische Signale ausgedrücktes Bild der Durchstrahlung des Objektes erhalten.

Ein Vorteil der Speicherfolien gegenüber herkömmlichen Röntgenfilmen ist der, dass die Speicherfolien oft wiederbenutzt werden können. Da beim Auslesevorgang auf Grund der nur kurzen lokalen Belichtung durch den Auslesestrahl einige der angeregten Elektronenzustände der Zentren zurückbleiben, ist es notwendig, die Speicherfolie vor einer neuen Aufnahme dadurch sicher zu löschen, dass man sie intensiv und längere Zeit mit Löschlicht bestrahlt. Wird dies versäumt, kann ein Schatten des vorhergehenden Röntgenbildes auf dem nächsten Röntgenbild erscheinen.

Die bisher verwendeten Löscheinrichtung für Speicherfolien sind getrennte Geräte, in welche die Speicherfolien dann gegeben werden, wenn sie das Auslesegerät verlassen haben.

Eine andere Möglichkeit besteht darin, wie in den Durckschriften US 5,081,357, US 5,818,065 und US 5,237, 177 beschrieben, die Löscheinrichtung mit in das Auslesegerät zu integrieren. Dabei werden die Speicherfolien zunächst in einer Vorwärtsbewegung an einer Leseeinrichtung vorbeigeführt. Vor oder während dem Rücktransport in ihre Kassette werden die Speicherfolien dann an der Löscheinrichtung vorbeigeführt, so dass die Speicherfolien vollständig gelöscht aus dem Auslesegerät abgegeben werden.

Im Hinblick auf die hohen Kosten der Speicherfolien und die große Anzahl von Röntgenaufnahmen, die in Krankenhäusern und ähnlichen Einrichtungen gemacht werden, ist es vorteilhaft, wenn eine Speicherfolie nach Auslesen des latenten Bildes möglichst rasch wieder zur Verfügung steht.

Zur Lösung dieser Aufgabe wird durch die vorliegende Erfindung ein Gerät zum Auslesen belichteter Speicherfolien angegeben, bei welchem das Löschen von Resten des latenten Bildes, die nach dem Auslesen verbleiben, im Wesentlichen zeitgleich mit dem Auslesen erfolgt. Merkmale eines solchen Gerätes sind im Anspruch 1 angegeben.

Eine Lichtsperre, die einen Flor aus absorbierendem Textilmaterial umfasst, genügt für viele Fälle den Anforderungen. Sie ist besonders preisgünstig und einfach herstellbar.

Vorteilhafte Weiterbildungen der Erfindung sind Gegenstand von Unteransprüchen.

Mit der Weiterbildung gemäß Anspruch 2 wird dabei erreicht, dass dann, wenn man den Flor der Lichtsperre besonders nahe bei der Bahn der Speicherfolien anordnet, etwaige zufällige Berührungen der Enden der Florschlingen keine Kratzer auf der Folienoberfläche hinterlassen.

Die Weiterbildung der Erfindung gemäß anspruch 3 ist im Hinblick auf möglichst vollständige Absorption von Löschlicht und Fluoreszenzlicht von Vorteil.

Behandelt man die einzelnen Florfasern gemäß Anspruch 4, so sind Restreflexionen an der Faseroberfläche weitgehend ausgeräumt.

Gleiches gilt für Fasermaterial nach Anspruch 5.

Eine Löschlichtquelle gemäß Anspruch 6 zeichnet sich durch geringe Wärmeentwicklung aus.

Eine Löschlichtquelle gemäß Anspruch 7 zeichnet sich durch geringen Energieverbrauch und kompakte Abmessungen sowie lange Lebensdauer aus.

Die Weiterbildungen gemäß den Ansprüchen 8 und 9 gewährleisten eine gleichförmige Löschung der Speicherfolie.

Nachstehend wird die Erfindung anhand von Ausführungsbeispielen unter Bezugnahme auf die Zeichnung näher erläutert. In dieser zeigen:
- Figur 1: eine schematische seitliche Ansicht eines kombinierten Gerätes zum Auslesen und gleichzeitigen Löschen der lichtempfindlichen Schicht einer Speicherfolie;
- Figur 2: einen axialen Schnitt durch eine Lichtsperre, die zwischen dem Löschkopf und dem Lesekopf des kombinierten Gerätes nach Figur 1 angeordnet ist;
- Figur 3: eine vergrößerte Aufsicht auf einen ersten Typ von Ringlamellen, der beim Aufbau der Lichtsperre nach Figur 2 verwendet wird;
- Figur 4: eine Aufsicht auf einen zweiten ringförmigen Lamellentyp, der beim Aufbau der Lichtsperre nach Figur 2 verwendet wird;
- Figur 5:: eine Aufsicht auf einen weiteren abgewandelten Typ einer ringförmigen Lamelle, aus welcher sich ein Stapel beabstandeter Abschirmlamellen herstellen lässt;
- Figur 6:: einen axialen Schnitt durch eine abgewandelte Lichtsperre;
- Figur 7:: einen transversalen Schnitt durch einen absorbierenden textilen Faden;
- Figur 8:: eine seitliche, teilweise geschnittene Ansicht einer LED-Löschlichtquelle und eines Antriebes für diese; und
- Figur 9:: eine seitliche Ansicht eines abgewandelten Auslesegerätes vom Typ Flachbett-Scanner.

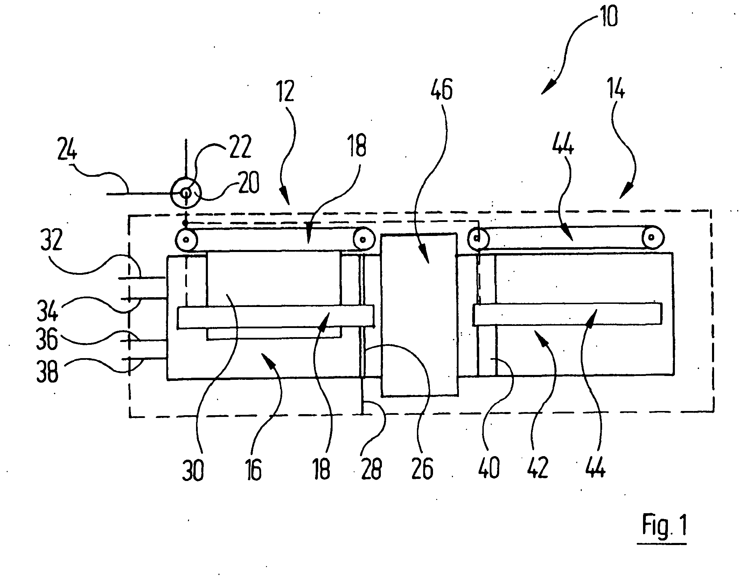

In Figur 1 ist mit 10 insgesamt ein kombiniertes Gerät zum Auslesen und Löschen von belichteten Speicherfolien bezeichnet. Es besteht aus einer insgesamt mit 12 bezeichneten Ausleseeinheit und einer insgesamt mit 14 bezeichneten Löscheinheit.

Die Ausleseeinheit 12 umfasst einen Aufspanntisch 16, der zylindrische Form aufweist und drei um den Umfang des Aufspanntisches herum verteilte Bandförderer 18, die untereinander mechanisch gekoppelt und mit der Ausgangswelle eines Elektromotors 20 verbunden sind. Der Elektromotor 20 ist seinerseits mit einem Stellungsgeber 22 verbunden. Dieser stellt sein Ausgangssignal auf einer Leitung 24 bereit.

Der Aufspanntisch 16 hat einen in Umfangsrichtung verlaufenden Ringspalt 26, durch den ein umlaufender Lesestrahl 28 austritt. Es handelt sich hierbei um Laserlicht mit einer Wellenlänge wie sie zum weiteren Anregen eines metastabil angeregten Zentrums einer Speicherfolie geeignet ist. Bezüglich Einzelheiten des Lesekopfes wird auf die WO 01/18796 A1 verwiesen.

In der Zeichnung ist mit 30 eine belichtete Speicherfolie angedeutet, die mit ihrer lichtempfindlichen Schicht nach unten auf dem Aufspanntisch 16 angeordnet ist.

Sie wird dabei durch die drei in Umfangsrichtung verteilten Bandförderer 18 in zylindrischer Geometrie gehalten. Zugleich bewegen die Bandförderer 18 die Speicherfolie 30 in Figur 1 nach rechts und über den Ringspalt 26 hinweg. Dabei werden die gerade über den Ringspalt liegenden Bildpunkte des latenten Bildes durch den umlaufenden Lichtstrahl 28 ausgelesen.

Die Ausleseeinheit 12 erhält über eine Leitung 32 eine Betriebsspannung zur Versorgung der verschiedenen in ihr enthaltenen Verbraucher und gibt über eine Leitung 34 ein der momentanen Winkelstellung des Lesestrahles 28 entsprechendes elektrisches Signal und über eine Leitung 36 das Ausgangssignal eines in ihr enthaltenen Fotomultipliers ab.

Der mit dem Elektromotor 20 gekoppelte Stellungsgeber 22 gibt ein Ausgangssignal ab, welches der Stellung der Speicherfolie 30 bezüglich des Ringspaltes 26 entspricht.

Aus den auf den Leitungen 24, 34 und 36 stehenden elektrischen Signalen lässt sich dann das elektronische Abbild des latenten Röntgenbildes erzeugen, wie in der WO 01/19796 A1 näher beschrieben.

Die Löscheinheit 14 hat ein in Umfangsrichtung verlaufenden breites transparentes Austrittsfenster 40 für Löschlicht, dessen Außenfläche eine glatte Fortsetzung eines Aufspanntisches 42 darstellt. Um den Aufspanntisch 42 herum verteilt sind Bandförderer 44 angeordnet, die untereinander und mit den Bandförderern 18 mechanisch gekoppelt sind.

Aus dem ringförmigen Austrittsfenster 40 tritt ein ringförmiger Vorhang aus Löschlicht aus. Da das Löschlicht gleichzeitig auf alle in einer Abtastlinie in Umfangsrichtung liegenden Punkte der Speicherfolie einwirkt, ist schon auf Grund des Zeitfaktors (Verhältnis von Pixel zu Abtastlinie) in der Löscheinheit 14 eine stärkere Beleuchtung gegeben als über dem Ringspalt 26 der Leseeinheit. Darüberhinaus kann man das Löschlicht auch breitbandiger wählen und durch eine nicht kohärente Lichtquelle erzeugen.

Die Fluoreszenzlampe 48 kann eine Warmton-Leuchtstoffröhre sein. Mit solchen kann eine Beleuchtungsstärke von 50.000 lx erreicht werden. Zum Löschen einer Speicherfolie wird eine Lichtmenge von etwa 500.000 lx s benötigt, wenn man das Löschen synchron zum Auslesen der Speicherfolie in kurzer Zeit erreichen will.

Erfolgen Auslesen und Löschen in einem kombinierten Auslese- und Löschgerät mit einer gemeinsamen Transporteinrichtung, welche die Speicherfolien durch die Leseeinheit und die Löscheinheit bewegt, so ist die Löschzeit im Wesentlichen der Auslesezeit plus derjenigen Zeit, die zum Überbrücken des Abstandes zwischen Leseeinheit und Löscheinheit benötigt wird.

Die Zeit zum Auslesen einer Speicherfolie ergibt sich aus der Nachleuchtdauer des Speicherleuchtstoffes. Enthält die lichtempfindliche Schicht einer Speicherfolie als Speicherleuchtstoff ein BaFBr:Eu-Material, so beträgt die Nachleüchtdauer nach dem Bestrahlen mit dem zum Auslesen verwendeten Laserlicht 880 ns. Hieraus ergibt sich eine Auslesedauer für Speicherfolien zur intraoralen Anwendung in der Größenordnung von 10s.

Leuchtstoffröhren eignen sich als Lichtquellen für die Löscheinheit 14 auch deshalb, weil sie einen hohen energetischen Wirkungsgrad aufweisen. An ihnen ist ferner vorteilhaft, dass sie sich nur wenig erwärmen, so dass die Speicherfolien beim Löschen nicht durch Hitzeeinwirkung beschädigt werden.

Um für das Löschen nicht dienliche Anteile im Spektrum der Fluoreszenzlampe 48 auszuschalten, kann um diese herum eine Kunststoff-Folie angeordnet werden, die als optisches Kantenfilter arbeitet. Dies ist so ausgewählt, dass nur die zum Löschen erwünschten Spektralanteile mit Wellenlängen oberhalb von 480 nm durchlässt.

Beim hier betrachteten Ausführungsbeispiel ist statt einer solchen Kunststoff-Folie das Austrittsfenster 40 aus einem transparenten Material hergestellt, welches entsprechende Filtereigenschaften aufweist.

Ein solches Kantenfilter ist auch im Hinblick auf eine zusätzliche Lichtsperre zwischen Löscheinheit und Leseeinheit vorteilhaft, da vor dem Fotodetektor der Leseeinheit ein Blau-Filter für Fluoreszenzlicht angeordnet ist, welches nur Wellenlängen unterhalb von etwa 450 nm hindurchlässt. Dieses Blau-Filter blockt das Löschlicht ab.

Eine perfekte Löschung beim Auslesen noch nicht deaktivierter Speicherzentren ist auch deshalb gewährleistet, weil die axiale Abmessung des Austrittsfensters 40 deutlich größer ist als diejenige des Ringspaltes 26 bzw. der Durchmesser des Auslesestrahles 28.

In der Praxis sind aus den genannten Gründen axiale Abmessungen des Austrittsfensters 40, die etwa 20 bis 100 mal größer sind als die des Ringspaltes 26 gut ausreichend.

Beim Hinüberbewegen über das Austrittsfenster 40 werden somit die beim Auslesen noch nicht deaktivierten Speicherzentren gelöscht, und wenn die Speicherfolie 30 dann vollständig über das Austrittsfenster 40 hinweggelaufen ist, kann sie direkt für eine neue Röntgenbelichtung verwendet werden.

Um zu vermeiden, dass durch das Austrittsfenster 40 austretendes Löschlicht (und beim Löschen entstehendes Fluoreszenzlicht) zu der Leseeinheit 12 zurückgelangen, wo sie das Auslesen nachfolgender Bildbereiche stören könnten, ist zwischen der Leseeinheit 12 und der Löscheinheit 14 eine ringförmige Lichtsperre 46 vorgesehen.

In der Zeichnung ist die Lichtsperre 46 der besseren Darstellbarkeit halber mit gegenüber der Praxis deutlich vergrößerten Abmessungen in Speicherfolien-Förderrichtung dargestellt. Bei praktischen Ausführungsbeispielen wird man die Lichtsperre 46 in Folien-Förderrichtung gerade so lang wählen, wie im Hinblick auf eine ausreichende Effektivität der Lichtsperre notwendig.

Je näher man das Austrittsfenster 40 an den Ringspalt 26 rücken kann, um so weniger unterscheidet sich die für das Auslesen und Löschen benötigte Gesamtzeit von derjenigen Zeit, die zum reinen Auslesen benötigt wird.

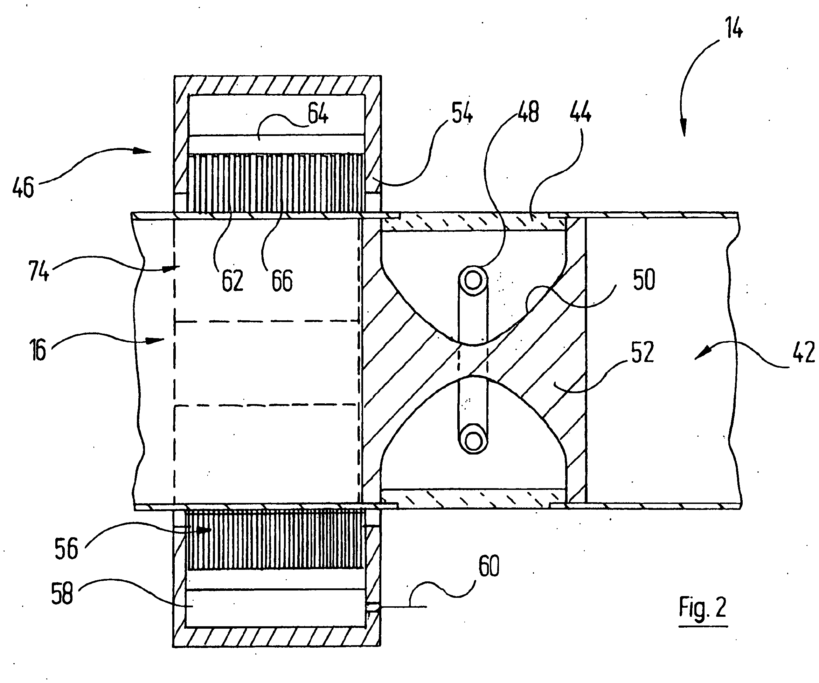

Figur 2 zeigt ein praktisches Ausführungsbeispiel für eine Löscheinrichtung mit vorgeschalteter Lichtsperre.

Hinter dem Austrittsfenster 40, welches als ringförmiger Glas- oder Kunststoffkörper ausgebildet ist, befindet sich eine ringförmige Fluoreszenzlampe 48. Hinter dieser befindet sich ein torusförmiger Parabolspiegel 50, der durch die mattierte Oberfläche eines rotationssymmetrischen Spiegelkörpers 52 gebildet ist. Dieser ist bündig ins Innere der Enden der Aufspanntische 16 und 39 von Ausleseeinheit 12 bzw. Löscheinheit 14 eingesetzt.

Eine nicht erfindungsgemässe Lichtsperre 46 hat ein Gehäuse 54, welches ein zylindrisches Lamellenpaket 56 unter radialem Spiel umgibt, so dass außerhalb des Lamellenpaketes ein Ringraum 58 erhalten wird, der mit einer Kühlgas-Speiseleitung 60 in Verbindung steht.

Das Lamellenpaket 56 besteht aus alternierend nebeneinander gestapelten ersten Lamellenscheiben 62 und zweiten Lamellenscheiben 64. Diese haben gleichen Außendurchmesser, jedoch stark unterschiedlichen Innendurchmesser, so dass man zwischen den Lamellen 62 und 64 axial flache ringförmige Taschen 66 erhält, deren radiale Erstreckung groß gegenüber ihrer axialen Abmessung ist.

Die Lamellenscheiben 62, 64 sind schwarz lackiert oder auf andere Weise mit einer Oberfläche versehen, welche von der Fluoreszenzlampe 48 abgegebenes Löschlicht und vorzugsweise auch Fluoreszenzlicht absorbiert.

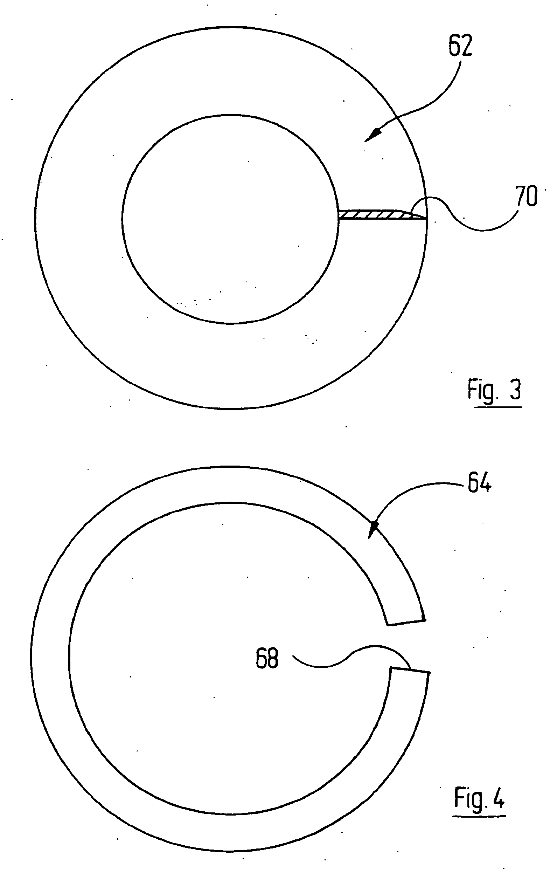

Die beiden Typen von Lamellenscheiben 62 und 64 sind in Figur 3 näher gezeigt.

Die kleine radiale Breite aufweisenden Lamellenscheiben sind jeweils an einer Stelle ihres Umfanges unterbrochen, wie bei 68 gezeigt. Auf diese Weise kann bei Kühlgasbeaufschlagung des Ringraumes 58 Kühlgas vom Boden der Taschen 66 zu deren offenem Ende hinströmen.

Die Lichtsperre 46 arbeitet so, dass sie von der Oberfläche des Aufspanntisches 16 reflektiertes Licht oder von einer Speicherfolie reflektiertes Licht absorbiert.

Auch schwarz oder sonst lichtabsorbierend eingefärbten Flächen ist aber noch eine gewisse Restreflexion eigen. Aus diesem Grunde werden die radial innenliegenden Flächen der Ringöffnungen dadurch klein gehalten, dass man den ersten Lamellenscheiben 62 nur sehr geringe axiale Abmessung gibt. Typischerweise können diese Lamellen aus einem ähnlichen Material wie Rasierklingen hergestellt sein, haben also nur eine Dicke von 0,1 mm.

Um die Größe der Stirnflächen weiter zu reduzieren, kann man die inneren Ränder der Lamellenscheiben 62 schneidenähnlich zuschärfen, wie in Figur 3 bei 70 angedeutet, wobei im Scheibenstapel die angewinkelte Seite der Anschärfung 70 zu der Löscheinheit 14 weist.

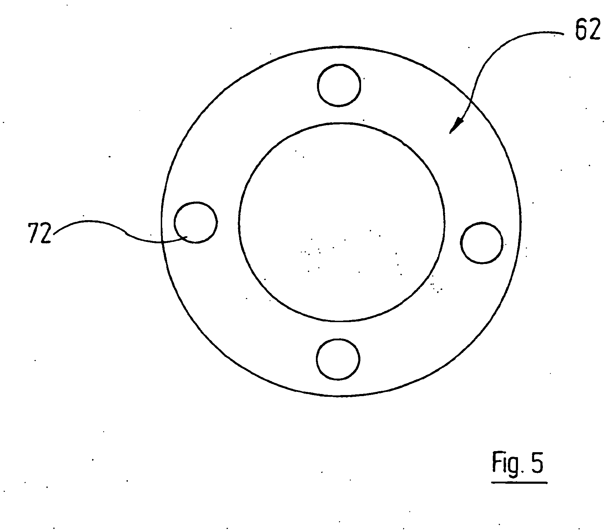

Alternativ kann man das Lamellenpaket 56 auch aus Lamellenscheiben gleichen Typs aufweisen, wenn man diese mit vorspringenden Abschnitten versieht, wie in Figur 5 gezeigt. Dort sind in einer Lamellscheibe 62, wie sie auch schon in Figur 3 gezeigt war, kreisförmige Bereiche 72 axial herausgedrückt.

Diese Ausdrückungen können auch größere axiale Abmessungen haben als die Dicke der Lamellenscheibe 62, so dass man größere axiale Abmessung aufweisende Taschen 66 erhält. Wie beim Ausführungsbeispiel nach Figur 4, bei welchem die Lamellenscheiben 62 und 64 gleich dick waren, kann man die axiale Abmessung der herausgedrückten kreisförmigen Bereiche 72 aber auch im Wesentlichen gleich groß wie die Dicke der Lamellenscheibe 62 wählen und erhält dann ein Lamellenpaket 56, wie es in Figur 2 gezeigt ist, mit dem einzigen Unterschied, dass die Taschen 66 abgesehen von kleinen Umfangsunterbrechungen durchgehend mit dem Ringraum 58 in Verbindung stehen. Hierdurch erhält man eine in Umfangsrichtung gut gleichmäßige Kühlung aller Lamellenscheiben.

Es versteht sich, dass die Lamellenscheiben gemäß Figur 5 zur Bildung des Lamellenpaketes 56 so hintereinander gestapelt werden, dass ihre herausgedrückten Bereiche 72 um 45° gegeneinander versetzt sind.

Falls gewünscht, kann man eine Lichtsperre der oben beschriebenen Art auch auf der Innenseite des Aufspanntisches 16 vorsehen, wie gestrichelt bei 74 angedeutet.

Die radiale Lage der inneren Ränder der Lamellenscheiben 62 (und entsprechend die Radien der außenliegenden Ränder ähnlicher Lamellenscheiben in einer Lichtsperre 74) ist so gewählt, dass sie einerseits möglichst nahe bei der Außenseite einer vorbeibewegten Speicherfolie 30 liegen, andererseits ein direkter Kontakt mit Sicherheit vermieden wird.

In der Praxis können die Abstände zwischen den inneren Rändern der Lamellenscheiben 62 (bzw. der äußeren Ränder von Lamellenscheiben einer Lichtsperre 74) einen Abstand von 0,1 bis 0,5 mm von der benachbarten Oberfläche der Speicherfolie 30 aufweise. Auf diese Weise arbeitet die Lichtsperre 46 berührungsfrei und stellt durch die tiefen absorbierenden Taschen 66 trotzdem sicher, dass kein Licht von der Löscheinheit 14 zu der Leseeinheit 12 gelangt.

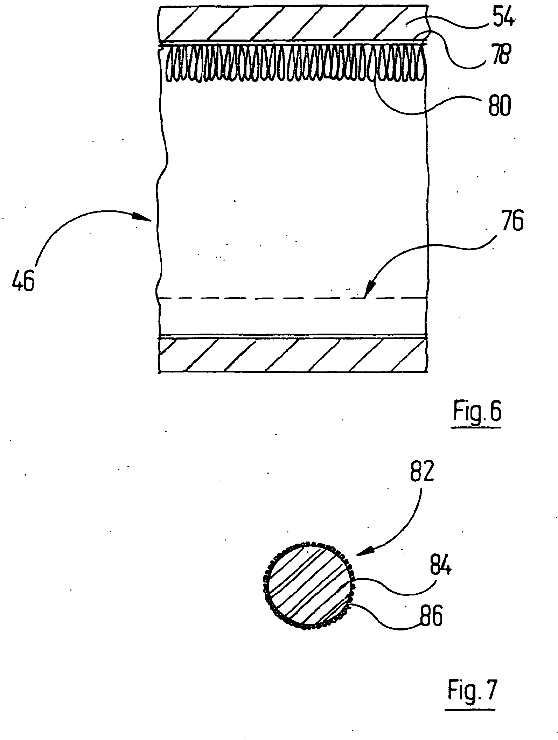

Alternativ zu einer nicht erfindungsgemässen Lichtsperre 46 mit einem Lamellenpaket 56, wie sie oben beschrieben Wurde, wird gemäß der Erfindung eine Lichtsperre 46 gemäß Figur 6 verwendet, deren Herstellungskosten nur gering sind.

Auf die Innenseite des hülsenförmigen Gehäuses 54 ist direkt eine Schicht eines Polschlingengewebes 76 aufgebracht. Dieses besteht aus einer Gewebeschicht 78 und einer Vielzahl von dieser getragender Polschlingen 80.

Die Höhe der Polschlingen 80 ist so gewählt, dass sie nur kleinen Abstand von der benachbarten Oberseite einer vorbeibewegten Speicherfolie aufweisen.

Da die Polschlingen 80 geschlossen sind, haben sie keine durch Abschneiden von Fasern entstandenen scharfen Kanten, die bei häufigem Vorbeilaufen einer Speicherfolie Kratz-oder Schleifspuren auf dieser erzeugen könnten.

Wie aus der Zeichnung ersichtlich, sind die Polschlingen 80 dicht an dicht gesetzt, so dass sie sich gegenseitig gegen Schwerkrafteinwirkung stabilisieren. Die Polschlingen bleiben somit über den gesamten Umfang der Innenfläche des Gehäuses 54 im Wesentlichen radial ausgerichtet.

Die Polschlingen 80 sind aus einem flexiblen Material hergestellt, welches im Volumen pigmentiert ist. Als Pigmente kommen dabei insbesondere feine Ruß- und schwarzer Kunststoffstaub in Frage, wie er zum Beispiel in Tonerpudern verwendet wird.

Um wiederum Reflexionen an der Faseroberfläche zu vermeiden wird diese mattiert, was in an sich bei der Ausrüstung von Kunststoff-Folien bekannter Weise durch chemisches Ätzen oder Behandeln in einer Gasentladung erfolgen kann.

Alternativ kann man, wie in Figur 7 gezeigt, auch ein Fadenmaterial 82 zur Herstellung der Polschlingen verwenden, welches eine thermoplastische Seele und hierauf festgeschweißte schwarze Absorberpartikel 86 aufweist.

Ein solches Fadenmaterial kann man zum Beispiel dadurch erzeugen, dass man es durch ein heißes Puderbett aus den Absorberpartikeln zieht und nach dieser Behandlung nicht fest gebundene Absorberpartikel 86 abbläst.

Anstelle der Fluoreszenzlampe 48 können auch andere Lichtquellen verwendet werden, deren Licht einen geringen Anteil im blauen und im UV aufweist, zum Beispiel eine Fluoreszenzlampe, deren Glasröhre mit einem Rotleuchtstoff beschichtet ist.

Um noch kürzere Löschzeiten realieren zu können, kann auch eine Halogenstablampe eingesetzt werden. Sie hat eine höhere Leistungsaufnahme und eine höhere Lichtabgabeintensität bezogen auf die Fläche des Emitters (Glühdraht).

Die die Lichtquelle umgebenden Wände der Löscheinheit 14 sind vorzugsweise mit einem für das Löschlicht sehr gut reflektierenden Material beschichtet, welches diffus reflektiert. Gut geeignet sind zum Beispiel weißer oder gelber Schaumstoff, weißes Teflon und blank poliertes Aluminiumblech. Eine besonders gute Reflektionsschicht besteht aus einem BaSO₄ -Material, insbesondere einem solchen Material, das mit einem Gelbfarbstoff versetzt ist. Mit diesem Material kann dann ein beliebiges Wandmaterial beschichtet sein.

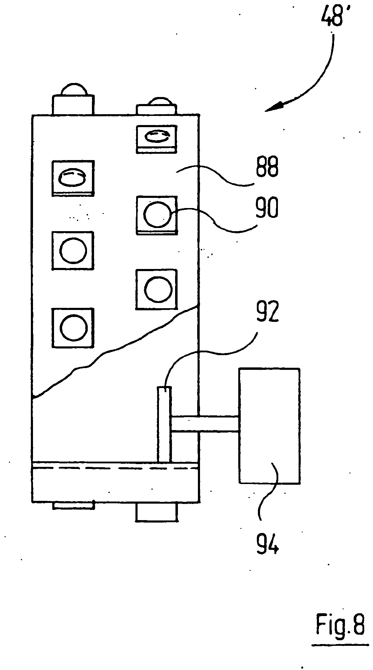

Neben den oben angesprochenen herkömmlichen Lichtquellen eignen sich für das Löschen der Speicherfolien aber auch Festkörper-Lichtquellen (LEDs). Diese sind derzeit nur als diskrete Einzelelemente mit verhältnismäßig kleinen Abmessungen verfügbar. Um das ganze ringförmige Austrittsfenster 40 mit einem ringförmigen Lichtvorhang auszufüllen, wird anstelle der Fluoreszenzlampe 48 eine ringförmige LED-Lichtquelle 48 verwendet, wie sie in Figur 8 gezeigt ist.

Auf der Außenseite eines Tragringes 88 sind in Umfangsrichtung regelmäßig verteilt Leuchtdioden 90 angeordnet, deren Arbeitswellenlänge oberhalb von 480 nm (typischerweise bei 630 nm) liegt, so dass ihr Licht für Löschzwecke geeignet ist, das Auslesen der Speicherfolie aber nicht nachteilig beeinträchtigt.

Im Hinblick auf die Gleichmäßigkeit der Ausleuchtung des Austrittsfensters sind vorzugsweise zwei axial beabstandete Ringe von Leuchtdioden 90 vorgesehen, in denen die einzelnen Leuchtdioden um eine halbe Teilung gegeneinander versetzt sind.

Es versteht sich, dass die Leuchtdioden in einem geeigneten Abstand hinter dem Austrittsfenster 40 liegen, derart, dass sich die von ihnen abgegebenen Lichtkegel auf der Außenfläche des Austrittsfensters 40 gerade überlappen.

Zur noch weiteren Vergleichmäßigung der Ausleuchtung des Austrittsfensters 40 kann das Austrittsfenster 40 mattiert sein, und/oder man kann den Tragring 88 auch mit einer Innenverzahnung versehen und über ein Ritzel 92 drehen, so dass Restwelligkeiten der Intensitätsverteilung in Umfangsrichtung durch zeitliche Mittelunng herausfallen. Damit ist eine gleichförmig gute Löschung der Speicherfolie 30 beim Hindurchlaufen durch die Löscheinheit 14 gewährleistet.

Werden in der Löscheinheit 14 Speicherfolien stark unterschiedlicher Abmessungen gelöscht, so kann man die Leuchtdioden 90 auch in Umfangsrichtung in Gruppen unterteilen und zum Löschen nur jeweils diejenigen Gruppen aktivieren, die zusammen die Breite der Speicherfolie 10 abdeckten.

Der Tragring 88 kann zur Verbesserung der Wärmeabfuhr wie die Leuchtdioden 90 aus gut wärmeleitendem Material hergestellt sein, z. B. aus Aluminium. Ggf. kann der Tragring 88 auch durch Anströmen mit Luft oder durch ein in einem internen Kühlmittelkanal umgewälztes flüssiges Kühlmittel gekühlt werden.

Ist der Scanner ein Flachbildscanner, so kann man eine (ggf. auch zusätzlich zu den oben beschriebenen Abschirmmaßnahmen zu verwendende) Abschirmung der Ausleseeinheit 12 gegen Löschlicht dadurch erzeugen, daß man die Speicherfolie vor der Leseeinheit in voneinander beabstandeten, vorzugsweise zueinander parallelen, Ebenen führt.

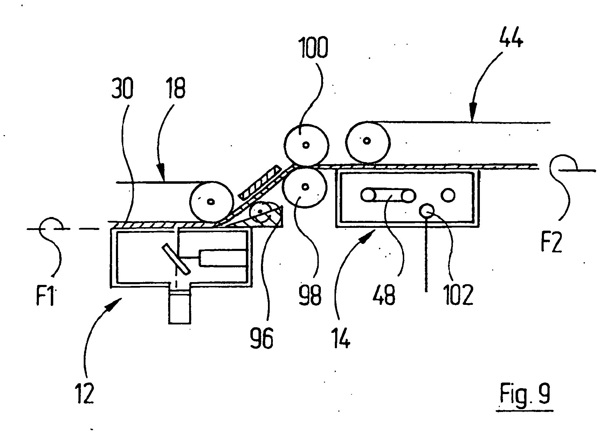

Ein derartiges Ausführungsbeispiel ist in Figur 9 gezeigt. Teile des Auslese- und Löschgerätes, die von der Funktion her solchen bei den oben beschriebenen Ausführungsbeispielen entsprechen, sind wieder mit den gleichen Bezugszeichen versehen und brauchen nachstehend nicht nochmals detailliert beschrieben zu werden.

Das in Figur 9 gezeigte Auslese- und Löschgerät 10 ist als Flachbildscanner ausgebildet. Die Speicherfolie 30 wird somit in ebener Konfiguration durch die Ausleseeinheit 12 bewegt.

Hinter der Ausleseeinheit 12 sind nun drei Walzen 96, 98, 100 vorgesehen, welche die Speicherfolie 30 aus einer ersten Förderebene F1, die bei der Ausleseeinheit 12 gilt, in eine zweite parallele nach oben beabstandete Förderebene F2 umlenkt, die bei der der Löscheinheit 14 gilt..

Durch diese Stufe im Förderweg ist die Gefahr, daß von der Löscheinheit 14 abgegebenes Löschlicht, welches auf Leckfaden die Umgebung erreicht, nicht die Ausleseeinheit 12 erreicht. Erstrecken sich die Walzen 96 bis 100 über die gesamte Breite der Speicherfolie 30, stellen die Walzen 96, 98, 100 darüber hinaus zusätzliche das Licht abschottende Blenden dar, die praktisch abstandsfrei an der Speicherfolie 30 angreifen.

Es. ist bekannt, daß sowohl breitbandige Löschlichtquellen wie Fluoreszenzlampen, Halogenlampen oder Xenonlampen einem Alterungsprozess unterliegen, durch den die abgegebene Lichtmenge reduziert wird. Auch bei schmalbandigen Löschlichtquellen wie LEDs hat man eine mit zunehmender Betriebsdauer einhergehende Abnahme des abgegebenen Lichtstromes.

Um dem zu begegnen, kann man, wie ebenfalls in Figur 9 gezeigt, in der Löscheinheit 14 eine Fotodiode 102 oder ein anderes lichtempfindliches Element vorsehen, dessen Ausgangssignal sich gemäß der Änderung des von der Lampe erzeugten Lichtstromes ändert. Das Ausgangssignal der Fotodiode 102 kann mann dann dadurch verwenden, entweder den Betriebsstrom der Lichtquelle so zu steigern, daß der abgegebene Lichtstrom unverändert bleibt, oder auch dazu, die Fördergeschwindigkeit der Speicherfolie 30 im Bereich der Löscheinheit 14 so zu verringern, daß auch bei herabgesetztem Lichtstrom die gleiche Bestrahlungsdosis erhalten wird.

Bei Verwendung einer schmalbandigen Löschlichtquelle kann man die Peak-Wellenlängen an die Peak-Wellenlänge der Absorption der F-Zentren des Phosphormateriales anpassen, um ein besonders effizientes Löschen verbliebener Bildreste zu erhalten.

In weiterer Abwandlung der oben beschriebenen Ausführungsbeispiele kann man den Winkelbereich der Löschlampe unter Verwendung von optischen Elementen (Spiegel, Linsen) auf diejenigen Raumbereiche beschränken, in welchen die Speicherfolie vor der Löscheinheit vorbeiläuft. Man erhält so eine Erhöhung der Intensität des Löschlichtes und entsprechend die Möglichkeit einer Verkürzung der Löschzeit.

## Patentansprüche

1. Gerät zum Auslesen von belichteten Speicherfolien (30), mit Haltemitteln (16, 42) zum Halten einer auszulesenden Speicherfolie (30) in vorgegebener Geometrie, mit einer Leseeinheit (12), welche einen in einer ersten Abtastrichtung bewegten Leselichtstrahl (28) erzeugt und Detektionsmittel zum Detektieren durch den Lesestrahl in der Speicherfolie (30) ausgelösten Fluoreszenzlichtes aufweist, und mit einer Antriebseinrichtung (18, 44) zum Erzeugen einer Relativbewegung zwischen der Speicherfolie (30) und der Leseeinheit (12) in einer von der ersten Abtastrichtung verschiedenen zweiten Abtastrichtung, wobei in Richtung der zweiten Abtastrichtung hinter der Leseeinheit (12) und mit dieser fluchtend eine Löscheinheit (14) angeordnet ist, wobei die Antriebseinrichtung (18, 44) so ausgebildet ist, dass sie sich auch über die Löscheinheit (10) erstreckt, und wobei zwischen der Leseeinheit (12) und der Löscheinheit (14) eine Lichtsperre (44, 46, 74) angeordnet ist,
**dadurch gekennzeichnet, dass**
die Lichtsperre (46) einen Flor (80) aus absorbierendem Textilmaterial umfasst und
die Antriebseinrichtung (18, 44) nur in eine Richtung arbeitet.

2. Gerät nach Anspruch 1, **dadurch gekennzeichnet, dass** der Flor (80) ein Polschlingenflor ist.

3. Gerät nach Anspruch 1 oder 2, **dadurch gekennzeichnet, dass** der Flor (80) aus einem im Volumen absorbierenden Material hergestellt ist.

4. Gerät nach Anspruch 3, **dadurch gekennzeichnet, dass** das absorbierende Material auf seiner Au-βenseite mattiert ist.

5. Gerät nach einem der Ansprüche 1 bis 4 **dadurch gekennzeichnet, dass** die Außenfläche des textilen Materials (82) mit absorbierenden Partikeln (86) besetzt ist.

6. Gerät nach einem der Ansprüche 1 bis 5, **dadurch gekennzeichnet, dass** eine Lichtquelle der Löscheinheit (14) eine Fluoreszenzlampe (48), insbesondere eine Warmtonleuchte oder eine Rotleuchtstoff-beschichtete Fluoreszenzlampe umfasst.

7. Gerät nach einem der Ansprüche 1 bis 5, **dadurch gekennzeichnet, dass** eine Lichtquelle der Löscheinheit (14) eine Mehrzahl derart beabstandeter Leuchtdioden (90) aufweist, dass sich ihre Lichtkegel in der Folienfläche überlappen.

8. Gerät nach Anspruch 7, **dadurch gekennzeichnet, dass** die Leuchtdioden (90) in mehreren in Förderrichtung der Speicherfolie (10) beabstandeten Reihen angeordnet sind und die Dioden aufeinanderfolgender Reihen gegeneinander versetzt sind.

9. Gerät nach Anspruch 7 oder 8, **dadurch gekennzeichnet, dass** die Leuchtdioden (90) auf einem Tragkörper (88) angeordnet sind, der in zur Förderrichtung der Speicherfolien senkrechter Richtung angetrieben (92, 94) ist.

10. Gerät nach einem der Ansprüche 1 bis 9, **dadurch gekennzeichnet, dass** im Bereich zwischen der Leseeinheit (12) und der Löscheinheit (14) eine Führungseinheit (96, 98, 100) vorgesehen ist, welche eine Stufe im Förderweg der Speicherfolie (30) vorgibt.

11. Gerät nach einem der Ansprüche 1 bis 10, **dadurch gekennzeichnet, dass** es ein lichtempfindliches Element (102) aufweist, welches mit Löschlicht beaufschlagt ist.

12. Gerät nach Anspruch 11, **gekennzeichnet durch** eine Einrichtung zur Regelung des von der Löschlichtquelle (48) abgegebenen Lichtstroms, welches in Abhängigkeit vom Ausgangssignal des vom Löschlicht beaufschlagten lichtempfindlichen Elements (102) arbeitet.

13. Gerät nach einem der Ansprüche 1 bis 12, **dadurch gekennzeichnet, dass** das Spektrum, insbesondere die Peak-Wellenlänge der Lichtquelle (48) auf das Maximum der Absorption der Speicherzentren der Speicherfolie (30) eingestellt ist.

14. Gerät nach einem der Ansprüche 1 bis 13, **gekennzeichnet durch** Mittel zum Sammeln des von der Löscheinheit (14) abgegebenen Löschlichts auf denjenigen Raumbereich, in welchem eine Speicherfolie (30) an der Löscheinheit (14) vorbeibewegt wird.

15. Gerät nach einem der Ansprüche 1 bis 14, **dadurch gekennzeichnet, dass** die Löschlichtquelle (48) umgebende Wände der Löscheinheit (14) diffus reflektierend ausgebildet sind.

16. Gerät nach einem der Ansprüche 1 bis 15, **dadurch gekennzeichnet, dass** die Löschlichtquelle (48) umgebende Wände der Löscheinheit (14) mit einer Löschlicht gut reflektierenden Beschichtung versehen sind.

## Claims

1. Device for reading out exposed imaging plates (30),
with retaining means (16, 42) for retaining in given geometry an imaging plate (30) to be read out, with a reading unit (12) which generates a reading light beam (28) which is moved in a first scanning direction and exhibits detection means for detecting fluorescent light released in the imaging plate (30) by the reading beam, and with a drive device (18, 44) for generating a relative motion between the imaging plate (30) and the reading unit (12) in a second scanning direction, different from the first scanning direction, wherein an erasing unit (14) is arranged in the direction of the second scanning direction behind the reading unit (12) and aligned with the latter, wherein the drive device (18, 44) is designed in such a way that it also extends over the erasing unit (10), and wherein a light barrier (44, 46, 74) is arranged between the reading unit (12) and the erasing unit (14),
**characterised in that**
the light barrier (46) includes a pile (80) made of absorbent textile material and
the drive device (18, 44) only drives in one direction.

2. Device according to Claim 1, **characterised in that**
the pile (80) is a loop pile.

3. Device according to Claim 1 or 2, **characterised in**
**that** the pile (80) is produced from a material that absorbs in volume.

4. Device according to Claim 3, **characterised in that**
the absorbent material is frosted on its outside.

5. Device according to one of Claims 1 to 4, **characterised in that** the outer surface of the textile material (82) is studded with absorbent particles (86).

6. Device according to one of Claims 1 to 5, **characterised in that** a light-source of the erasing unit (14) includes a fluorescent lamp (48), in particular a warm-tone illuminator or a red-phosphor-coated fluorescent lamp.

7. Device according to one of Claims 1 to 5, **characterised in that** a light-source of the erasing unit (14) exhibits a plurality of light-emitting diodes (90) which are spaced in such a manner that their light cones overlap in the surface of the plate.

8. Device according to Claim 7, **characterised in that**
the light-emitting diodes (90) are arranged in several rows spaced in the conveying direction of the imaging plate (10), and the diodes of consecutive rows are offset in relation to one another.

9. Device according to Claim 7 or 8, **characterised in**
**that** the light-emitting diodes (90) are arranged on a carrying body (88) which is driven (92, 94) in the direction perpendicular to the conveying direction of the imaging plates.

10. Device according to one of Claims 1 to 9, **characterised in that** in the region between the reading unit (12) and the erasing unit (14) a guidance unit (96, 98, 100) is provided which predetermines a step in the conveying path of the imaging plate (30).

11. Device according to one of Claims 1 to 10, **characterised in that** it exhibits a light-sensitive element (102) which has erasing light applied to it.

12. Device according to Claim 11, **characterised by** a device for regulating the luminous flux emitted by the erasing-light source (48), which operates as a function of the output signal of the light-sensitive element (102) which has erasing light applied to it.

13. Device according to one of Claims 1 to 12, **characterised in that** the spectrum, in particular the peak wavelength of the light-source (48), is set to the maximum of the absorption of the storage centres of the imaging plate (30).

14. Device according to one of Claims 1 to 13, **characterised by** means for collecting the erasing light emitted by the erasing unit (14) onto that spatial region in which an imaging plate (30) is moved past the erasing unit (14).

15. Device according to one of Claims 1 to 14, **characterised in that** the walls of the erasing unit (14) surrounding the erasing-light source (48) are designed to be diffusely reflecting.

16. Device according to one of Claims 1 to 15, **characterised in that** the walls of the erasing unit (14) surrounding the erasing-light source (48) are provided with a coating that reflects erasing light well.

## Revendications

1. Appareil de lecture de feuilles de stockage exposées (30), avec des moyens de maintien (16, 42) pour maintenir une feuille de stockage (30) à lire dans une géométrie prédéfinie, avec une unité de lecture (12) qui génère un faisceau de lumière de lecture (28) déplacé dans une première direction de balayage et présente des moyens de détection pour détecter une lumière de fluorescence déclenchée dans la feuille de stockage (30) par le faisceau de lecture, et avec un dispositif d'entraînement (18, 44) pour générer un mouvement relatif entre la feuille de stockage (30) et l'unité de lecture (12) dans une deuxième direction de balayage différente de la première direction de balayage, une unité d'effacement (14) étant disposée derrière l'unité de lecture (12) et en alignement avec celle-ci dans la direction de la deuxième direction de balayage, le dispositif d'entraînement (18, 44) étant conçu de façon à s'étendre aussi sur l'unité d'effacement (10), et une barrière anti-lumière (44, 46, 74) étant disposée entre l'unité de lecture (12) et l'unité d'effacement (14),
**caractérisé en ce que**
la barrière anti-lumière (46) comprend un voile (80) en matériau textile absorbant et
le dispositif d'entraînement (18, 44) travaille dans une seule direction.

2. Appareil selon la revendication 1, **caractérisé en ce que** le voile (80) est un voile en boucles de poil.

3. Appareil selon la revendication 1 ou 2, **caractérisé en ce que** le voile (80) est réalisé dans un matériau absorbant en volume.

4. Appareil selon la revendication 3, **caractérisé en ce que** le matériau absorbant est rendu mat sur son côté extérieur.

5. Appareil selon une des revendications 1 à 4, **caractérisé en ce que** la surface extérieure du matériau textile (82) est garnie de particules absorbantes (86).

6. Appareil selon une des revendications 1 à 5, **caractérisé en ce qu'**une source de lumière de l'unité d'effacement (14) comprend une lampe fluorescente (48), en particulier une lampe à ton chaud ou une lampe fluorescente revêtue de substance fluorescente rouge.

7. Appareil selon une des revendications 1 à 5, **caractérisé en ce qu'**une source de lumière de l'unité d'effacement (14) présente une pluralité de diodes luminescentes (90) espacées de façon que leurs cônes lumineux se recouvrent partiellement sur la surface de la feuille.

8. Appareil selon la revendication 7, **caractérisé en ce que** les diodes luminescentes (90) sont disposées en plusieurs rangées espacées dans la direction de transport de la feuille de stockage (10) et les diodes de rangées successives sont décalées les unes par rapport aux autres.

9. Appareil selon la revendication 7 ou 8, **caractérisé en ce que** les diodes luminescentes (90) sont disposées sur un corps porteur (88) qui est entraîné (92, 94) dans une direction perpendiculaire à la direction de transport des feuilles de stockage.

10. Appareil selon une des revendications 1 à 9, **caractérisé en ce qu'**une unité de guidage (96, 98, 100) est prévue dans la zone entre l'unité de lecture (12) et l'unité d'effacement (14), laquelle unité de guidage (96, 98, 100) définit un palier sur le chemin de transport de la feuille de stockage (30).

11. Appareil selon une des revendications 1 à 10, **caractérisé en ce qu'**il présente un élément photosensible (102) qui est exposé à une lumière d'effacement.

12. Appareil selon la revendication 11, **caractérisé par** un dispositif de réglage du flux lumineux émis par la source de lumière d'effacement (48), lequel travaille en fonction du signal de sortie de l'élément photosensible (102) qui est exposé à la lumière d'effacement.

13. Appareil selon une des revendications 1 à 12, **caractérisé en ce que** le spectre, en particulier la longueur d'onde de pic de la source de lumière (48), est réglé sur le maximum d'absorption des centres de stockage de la feuille de stockage (30).

14. Appareil selon une des revendications 1 à 13, **caractérisé par** des moyens pour collecter la lumière d'effacement émise par l'unité d'effacement (14) sur la région de l'espace dans laquelle une feuille de stockage (30) est déplacée devant l'unité d'effacement (14).

15. Appareil selon une des revendications 1 à 14, **caractérisé en ce que** des parois de l'unité d'effacement (14) entourant la source de lumière d'effacement (48) sont configurées pour réfléchir de manière diffuse.

16. Appareil selon une des revendications 1 à 15, **caractérisé en ce que** des parois de l'unité d'effacement (14) entourant la source de lumière d'effacement (48) sont munies d'un revêtement qui réfléchit bien la lumière d'effacement.
